# EUROPEAN PATENT SPECIFICATION

(11) **EP 2 671 023 B1**
(45) Date of publication and mention of the grant of the patent: **01.08.2018**
(21) Application number: 11807700.7
(22) Date of filing: 29.12.2011
(51) Int. Cl.: F23C 10/02, F23C 10/04, C10J 3/84, C10J 3/48, C10J 3/72

(54) **A PROCESS AND A SYSTEM FOR THE GASIFICATION AND/OR COMBUSTION OF BIOMASS AND/OR COAL WITH AN AT LEAST PARTIAL CARBON DIOXIDE SEPARATION**
VERFAHREN UND SYSTEM ZUR VERGASUNG UND/ODER VERBRENNUNG VON BIOMASSE UND/ODER KOHLE MIT MINDESTENS TEILWEISER KOHLENDIOXIDTRENNUNG
PROCÉDÉ ET SYSTÈME POUR LA GAZÉIFICATION ET/OU LA COMBUSTION DE BIOMASSE ET/OU DE CHARBON AVEC UNE SÉPARATION DE DIOXYDE DE CARBONE AU MOINS PARTIELLE

(30) Priority: 04.02.2011 EP 11153368
(43) Date of publication of application: 11.12.2013
(73) Proprietor: Paul Scherrer Institut, 5232 Villigen PSI (CH)
(72) Inventor: SCHILDHAUER, Tilman J., CH-Brugg 5220 (CH)
(74) Representative: Fischer, Michael
(86) International application number: PCT/EP2011/074242
(87) International publication number: WO 2012/103997

(56) References cited:
- WO-A1-2009/018200
- WO-A1-2010/086529
- WO-A2-2007/082089
- WO-A2-2010/040787
- DE-A1- 19 900 116
- US-A1- 2010 299 997
- FAN L ET AL: "Utilization of chemical looping strategy in coal gasification processes", PARTICUOLOGY,, vol. 6, no. 3, 1 June 2008 (2008-06-01), pages 131-142, XP022938319, ISSN: 1674-2001, DOI: 10.1016/J.PARTIC.2008.03.005 [retrieved on 2008-05-22]

## Description

The present invention relates to a process and a system for the gasification and/or combustion of biomass and/or coal with an at least partial carbon dioxide separation using a combined reactor having a combustion part and a gasification part.

More and more the emission of carbon dioxide becomes an issue for the gasification and combustion of solid fuels, such as coal, dry biomass, refinery residue and the like. There will be a rising demand for the un-expensive and effective separation of carbon dioxide, e.g. to allow for efficient sequestration. This also applies for the combustion parts of allothermal gasifiers like the Fast Internal Circulating Fluidized Bet (FICFB-) Gasifier installed at Güssing, Austria, or the heat pipe reformer.

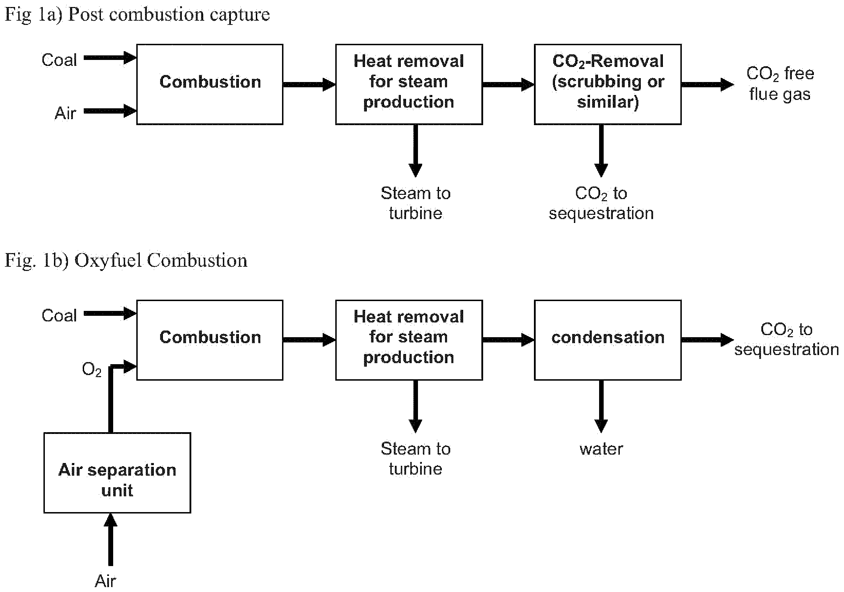

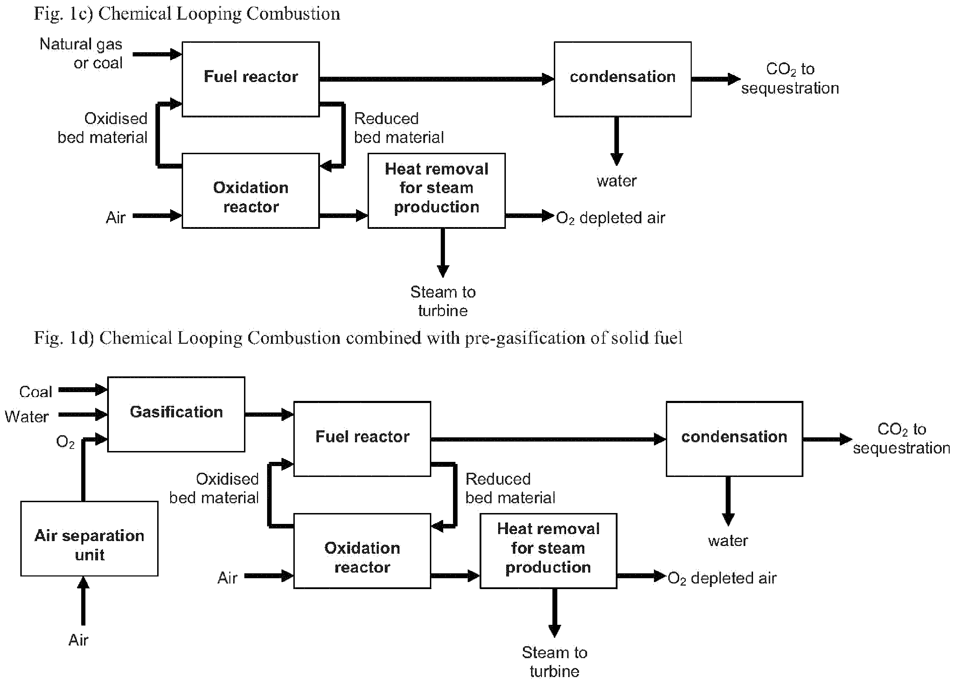

So far, separation of carbon dioxide in combustion procession is based on scrubbing of the flue gas downstream of the combustion (so-called post combustion capture, see figure 1a). The scrubbing and the regeneration of the scrubbing liquid is energy intensive and decreases the efficiency of power plants with such post combustion capture significantly.
In order to achieve flows of rather neat carbon dioxide, beside the cost-extensive use of neat oxygen requiring an energy-intensive air separation (oxyfuel combustion, see figure 1b), the use of oxygen transfer materials in chemical looping processes is already known in the art (CLC = Chemical Looping Combustion, see figure 1c; CLG = Chemical Looping Gasification).

Unfortunately, most processes known in the art relate to the combustion of natural gas in contact with oxygen transfer materials in order to achieve a nitrogen-free exhaust gas facilitating the sequestration of the carbon dioxide. Unfortunately, the combustion of solid fuels is utterly challenging with respect to the CCS being superimposed by the need to separate the carbon dioxide at low cost and high efficiency.
Some solutions suggest a pre-gasification of the solid fuel upstream of the chemical looping combustion (see figure Id). However, this solution again asks for an energy intensive air separation.
Other solutions describe the combination of the gasification of solid fuels with the internal combustion in the presence of oxygen transfer materials (Figure 1c). Some of them, e.g. WO 2010/086529 want to make use of partial reduction of the oxygen material leading to metallic surface species which may improve the gasification of the solid fuels. However, two major drawbacks exist when allowing a direct physical contact among the solid fuel and the oxygen transfer material. First, a solid-solid reaction has to be established which has a rather low reactivity despite of the immediate gassing. Second, the oxygen transfer material is directly exposed to the ash and soot particles which may impair the stability of the bed material at long term. Further, when approaching or exceeding the melting point of the ash, the oxygen transfer material (bed material) may be prone to clogging which may lead to the complete failure of the reactor.
It is therefore the aim of the present invention to provide a process and a system for the gasification and/or combustion of biomass and/or coal with an at least partial carbon dioxide separation enabling an effective gasification as well as an un-expensive and effective separation of carbon dioxide thereby achieving a long-term stability of the materials used in the process and the system.
These objectives are achieved according to the present inventions by a process for the gasification and/or combustion of biomass and/or coal as described in claim 1. With respect to the system these objectives are achieved by a system according to claim 11.

This process and this system guarantee an effective gasification of the raw materials as well as an effective and un-expensive separation of carbon dioxide which is leaving as exhaust gas the combustion part. Filtering ash, soot and other solid particles avoids the danger of clogging the bed material in the combustion part and therefore yields a long term stability of the bed material. In particular, the reaction path using the further combustion reactor separates the partial combustion of the product gas in the combustion part for heating the gasification part (e.g. heat transfer by heatpipes) from the entire combustion of the partially fuel-depleted product gas when entering into the further combustion reactor. This separation allows to operate the almost only carbon dioxide and water steam comprising exhaust gas of the further combustion reactor at a significantly higher temperature yielding a significant efficiency gain when expanding this gas in a power turbine.

In order to improve the efficient use of the raw material employed, ash, soot and the other solid particles filtered can be at least partially re-fed into the gasification part allowing both heat recovery and a rather complete fuel exhaustion.

The efficiency of the process strongly depends on the right choice for the bed material. The bed material is an oxygen transfer material being able to provide the desired amount of oxygen to control the heat transferred to the gasification part. The bed material furthermore requires a good high temperature stability as well as a good thermo-dynamical efficiency in the redox cycle. Therefore, the bed material can be preferably selected from a group of bulk or supported materials containing Cu, Fe, Mn, Ni, Si, Al, Mg, Ca, Ti, La, Ce and/or Zr, their oxides, hydroxides, silicates, carbonates, sulphides or sulphates as well as any mixture thereof.

The overall efficiency of the present process can be further improved when the exhaust gas of the oxidation reactor (which is fed with air) is expanded in turbine or is used to transfer heat into a heat exchanger.

In order to achieve a complete exploitation of the filtered product gas, it is important that an excess supply of oxygen can be offered to the already fuel-depleted product gas. Therefore, the present invention comprises the step of first feeding the freshly re-oxidized bed material into the further combustion reactor and subsequently into the combustion part as seen in the material flow direction of the bed material.

In order to benefit from the energy inherent to the exhaust gas of either the combustion reactors, the process may comprise the step of expanding the exhaust gas of the combustion reactor and/or of the further combustion reactor in a turbine or using it to transfer heat to a heat exchanger or using it for at least partial further combustion in a fuel cell. Alternatively, the exhaust gas of the combustion reactor and/or of the further combustion reactor may be used in a catalytic conversion such as methanation, Fischer-Tropsch-synthesis, synthesis of alcohols and ethers or similar, optionally feeding the gas via gas cleaning and/or gas conditioning units.

Further advantageous embodiments of the present invention are dedicated to select the operating conditions and the bed material in a way that sulphur and/or alkali or heavy metal species can be transported from the combustion reactors and/or the further combustion reactor to the oxidation reactor where they are at least partially released. Furthermore, the operation conditions and the bed material may be chosen such that tars, organic sulphur species and/or hydrocarbons are reformed or decomposed.

Another advantageous example of the present invention is achievable when part of the product gas is directly fed to the exhaust of the combustion reactor.

Preferably, the heat generated in the combustion reactor is transferred to the gasification reactor by means of a suited heat transfer device such as heat pipes. Heat pipes are in particular a preferred media to transfer heat from the combustion reactor to the gasification reactor without transferring oxygen into the gasification reactor. The heat required for the gasification can be transferred from the oxidation reactor or the further combustion reactor to the gasification reactor.

Furthermore, the fuel containing gas streams from a downstream use of the exhaust gases of the combustion reactors and/or the further combustion reactor, e.g. from a catalytic conversion or an at least partial further combustion in a fuel cell, may be fed to the combustion reactors and/or the further combustion reactor.

Preferred embodiments of the present invention are hereinafter described with reference to the following drawings which depict in:
- Figure 1: Schematic representations of different process chains related to carbon dioxide capture in combustion and gasification processes;
- Figure 2: a schematic concept for the Chemical Looping Combustion of solid fuels with integrated purification of the hot product gas; and
- Figure 3: illustrates the alternative concept of the Chemical Looping Gasification without the use of the further combustion reactor which is not according to the invention.

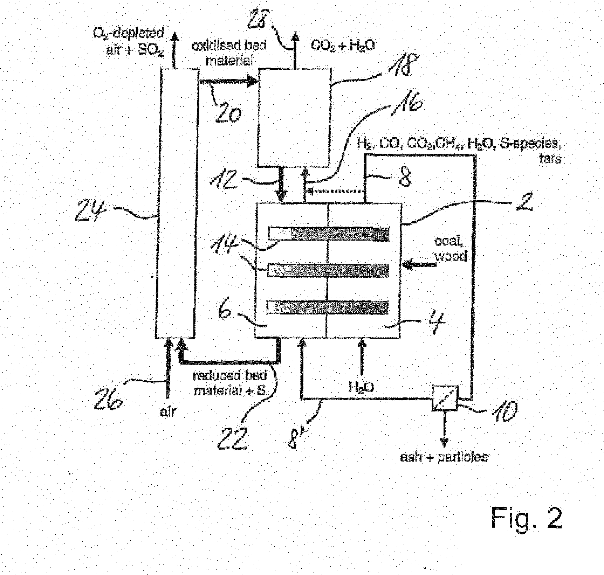

The concept of the Chemical Looping Combustion (CLC) of solid fuels, such as coal, biomass, sewage sludge, abattoir refuse and the like, shown in Figure 2, illustrates a process for the gasification and/or combustion of biomass and/or coal with an at least partial carbon dioxide separation using a combined reactor 2 having a gasification part 4 and a combustion part 6. The coal and/or biomass is fed into the gasification part 4 of the combustion/gasification reactor 2 which is built as an allothermal gasifier. In the gasification part 4, usually under an additional feed of water/water vapour, the coal and/or the biomass is gasified at an elevated temperature (500 - 1200°C) and at an optionally elevated pressure (<10 bar) in order to generate a product gas 8 comprising typically hydrogen, carbon monoxide, methane, water vapour, S-species, tars, hydrocarbons (e.g. olefins or aromatic compounds), ash, soot and other solid particles. The product gas 8 is led to a filter 10 separating the product gas 8 from its solid components, such as the ash, the soot and other solid particles. The filtered particles can be recycled into the gasification part 4.

The filtered product gas 8' is fed as well as an already partially reduced primarily oxidized bed material 12 into the combustion part 6 of the reactor 2. In the combustion part 6, the already partially reduced oxidized bed material 12 is further reduced at elevated temperatures (>500°C) thereby at least partially combusting the filtered product gas 8' in order to generate heat that is consumed both for the combustion and the transfer via heatpipes 14 (or other suited heat transfer devices) into the gasification part 4 (allothermal gasification). The bed material comprises grains having a particle size of 0.1 mm to 35 mm in order to enable a fluidized or moving bed reactor in the combustion part. The bed material is selected from a group of bulk or supported materials containing Cu, Fe, Mn, Ni, Si, Al, Mg, Ca, Ti, La, Ce and/or Zr, their oxides, hydroxides, silicates, carbonates, sulphides or sulphates as well as any mixture thereof. Beside its potentially catalytic activity (e.g. for tar reforming), the bed material is used as an oxygen transfer material that provides the oxygen necessary for the at least partial combustion of the filtered product gas 8'. The oxidation of the fuel components in the filtered product gas 8', such as hydrogen, carbon monoxide, methane and the higher hydrocarbons, thereby comes with the reduction of the bed material. The material flow rate of the bed material as well as the flow rate of the filtered product gas 8' is set to meet the demand of heat for the heat pipes.

A further option (depending on the operation condition and the properties of the bed material) is the use of the bed material as sulphur transfer material, e.g. by sulphidation during the at least partial reduction of the bed material in presence of the filtered product gas 8' and subsequent oxidation of the bed material with inherent SO2-formation in the oxidation reactor 24. The almost fuel-depleted exhaust gas 16 of the combustion part 6 can either be expanded in a turbine (not shown) or used in heat exchanger (not shown) or is fed into a further combustion reactor 18. In the present example, the flow of freshly oxidized bed material 20 is fed into the further combustion reactor 18 in order to combust the remaining fuel components of the almost fuel-depleted exhaust gas 16. Again, the bed material 20 provides the oxygen necessary for this combustion in order to guarantee the process to be nearly free of nitrogen. The at least partially reduced bed material 22 is then fed into an oxidation reactor 24 fed with air 26 in order to re-oxidize the bed material prior to its recirculation into the combustion part 6 or the further combustion reactor 18. The exhaust gas 28 of the further combustion reactor 18 is finally completely free of fuel components and optionally depleted in sulphur species and comprises mainly carbon dioxide and water as main components. Herewith, the goal of an almost completely separated flow of carbon dioxide in the gasification of solid fuels is achieved. The exhaust gas 28 which is nearly free of nitrogen can then be passed to a turbine expansion for power generation. It is also possible to add further fuel or a part of the product gas 8 directly into the further combustion reactor 18 in order to increase the temperature in this combustion step for improving the efficiency of the exhaust gas 28 during turbine expansion.

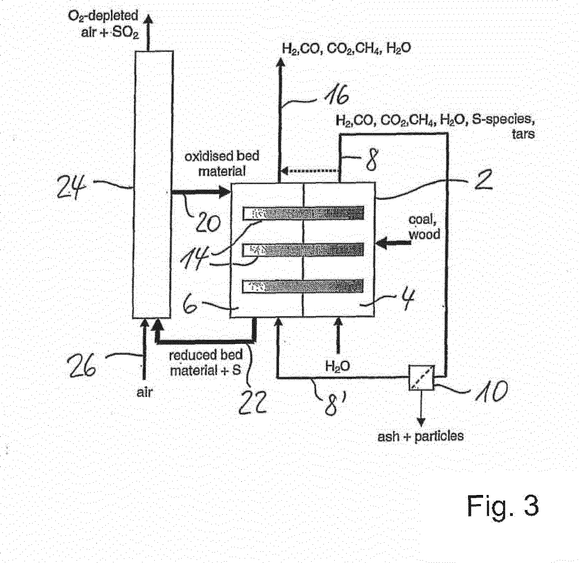

Figure 3 illustrates the concept not according to the invention of the Chemical Looping Gasification without the use of the further combustion reactor 18 as depicted in Figure 2. This concept is rather similar to the concept shown in Figure 2. The already partially fuel-depleted exhaust gas 16 of the combustion part 6 is here available for further thermo-chemical or catalytic treatment like methanation, methanol-, Fischer-Tropsch or DME-synthesis or the like, optionally feeding via gas cleaning and/or gas conditioning units.

## Claims

1. A process for the gasification of biomass and/or coal with an at least partial carbon dioxide separation using a combined combustion/gasification reactor (2) having a combustion part (6) and a gasification part (4), comprising the steps of:
a) feeding the coal and/or feeding biomass into the gasification part (4) of the combustion/gasification reactor (2);
b) in the gasification part (4), optionally under a feed of water or water vapour, heating and optionally pressuring the coal and/or the biomass at an elevated temperature and at an optionally elevated pressure in order to generate a product gas (8) ;
c) filtering the product gas (8) to separate ash, soot and other solid particles from the product gas (8);
d) feeding the filtered product gas (8') and an at least partially oxidized bed material (20) into the combustion part (6) of the combustion/gasification reactor (2), wherein the bed material (20) is an oxygen transfer material, preferably selected from a group of bulk or supported materials containing Cu, Fe, Mn, Ni, Si, Al, Mg, Ca, Ti, La, Ce and/or Zr, their oxides, hydroxides, silicates, carbonates, sulphides or sulphates as well as any mixture thereof;
e) in the combustion part (6), at least partially reducing the oxidized bed material (20) by at least partially combusting the filtered product gas in order to generate heat that is being transferred partially into the gasification part (4);
f) leading the exhaust gas (16) of the combustion part (6) into a further combustion reactor (18) and leading the at least partially reduced bed material (22) into an oxidation reactor (24) fed with air (26) in order to at least partially re-oxidize the bed material prior to its recirculation, wherein the bed material is used as sulphur transfer material by sulfidation during the at least partial reduction of the bed material in presence of the filtered product gas (8') and subsequent oxidation of the bed material with inherent SO2-formation in the oxidation reactor (24); and wherein the freshly re-oxidized bed material (20) is fed first into the further combustion reactor (18) and subsequently into the combustion part (6) as seen in the material flow direction of the bed material; and wherein the heat generated in the oxidation reactor (24) and/or in the further combustion reactor (18) is transferred to the gasification part (4) by means of a suited heat transfer device such as heat pipes.

2. The process according to claim 1, wherein the ash, soot and the other solid particles filtered are at least partially re-fed into the gasification part (4).

3. The process according to any of the preceding claims, wherein the exhaust gas of the oxidation reactor (24) is expanded in a turbine or is used to transfer heat to a heat exchanger.

4. The process according to any of the preceding claims, wherein the exhaust gas of the further combustion reactor (18) is expanded in a turbine or is used to transfer heat to a heat exchanger or for at least partial further combustion in a fuel cell.

5. The process according to any of the preceding claims, wherein the exhaust gas of the further combustion reactor (18) is used in a catalytic conversion such as methanation, Fischer-Tropsch-synthesis, synthesis of alcohols and ethers or similar, optionally feeding the gas via gas cleaning and/or gas conditioning units.

6. The process according to any of the preceding claims, wherein the operation conditions and the bed material are chosen such that sulphur and/or alkali or heavy metal species can be transported from the combustion part (6) and the further combustion reactor (18) to the oxidation reactor (24) where they are at least partially released.

7. The process according to any of the preceding claims, wherein the operation conditions and the bed material are chosen such that tars, organic sulphur species and/or hydrocarbons are reformed or decomposed.

8. The process according to any of the preceding claims, wherein part of the product gas (8) is directly fed to the exhaust (16) of the combustion part (6).

9. The process according to any of the preceding claims, wherein the heat generated in the combustion part (6) is transferred to the gasification part (4) by means of a suited heat transfer device such as heat pipes.

10. The process according to any of the preceding claims, wherein fuel containing gas streams from a downstream use of the exhaust gases (16) or (28) of the combustion part (6) and/or of the further combustion reactor (18), e.g. from a catalytic conversion or an at least partial further combustion in a fuel cell, is fed to the combustion part (6) and/or the further combustion reactor (18) .

11. A system for the gasification of biomass and/or coal with an at least partial carbon dioxide separation using a combined combustion/gasification reactor (2) having a combustion part (6) and a gasification part (4), comprising:
a) a feeder to feed the coal and/or the biomass into the gasification part (4) of the combustion/gasification reactor (2) ;
b) in the gasification part (4), optionally under a feed of water or water vapour, heating and optionally pressuring the coal and/or the biomass at an elevated temperature and at an optionally elevated pressure in order to generate a product gas (8);
c) a filter to filter the product gas (8) to separate ash, soot and other solid particles from the product gas (8);
d) at least one duct to feed the filtered product gas (8')and an at least partially oxidized bed material (20) into the combustion part (6) of the combustion/gasification reactor (2), wherein the bed material (20) is an oxygen transfer material, preferably selected from a group of bulk or supported materials containing Cu, Fe, Mn, Ni, Si, Al, Mg, Ca, Ti, La, Ce and/or Zr, their oxides, hydroxides, silicates, carbonates, sulphides or sulphates as well as any mixture thereof;
e) in the combustion part (6), at least partially reducing the oxidized bed material (20) by at least partially combusting the filtered product gas in order to generate heat that is transferred by heat transfer means at least partially into the gasification part (4);
f) at least one further duct to lead the exhaust gas (16) of the combustion part (6) into a further combustion reactor (18) and to lead the at least partially reduced bed material (22) into an oxidation reactor 24 fed with air (26) in order to at least partially re-oxidize the bed material prior to its recirculation, wherein the bed material is used as sulphur transfer material by sulfidation during the at least partial reduction of the bed material in presence of the filtered product gas (8') and subsequent oxidation of the bed material with inherent SO2-formation in the oxidation reactor (24); and wherein the freshly re-oxidized bed material (20) is fed first into the further combustion reactor (18) and subsequently into the combustion part (6) as seen in the material flow direction of the bed material; and wherein the heat generated in the oxidation reactor (24) and/or in the further combustion reactor (18) is transferred to the gasification part (4) by means of a suited heat transfer device such as heat pipes.

## Patentansprüche

1. Ein Verfahren zur Vergasung von Biomasse und/oder Kohle mit mindestens teilweiser Kohlendioxidtrennung durch Benutzung eines kombinierten Verbrennungs-/Vergasungsreaktor (2), der einen Verbrennungsteil (6) und einen Vergasungsteil (4) hat und folgende Schritte beinhaltet:
a) das Einspeisen der Kohle und/oder das Eispeisen der Biomasse in den Vergasungsteil (4) des Verbrennungs-/Vergasungsreaktor (2);
b) in dem Vergasungsteil (4) das Heizen und das wahlweise unter Druck setzten der Kohle und/oder der Biomasse bei erhöhter Temperatur und unter einem wahlweise erhöhten Druck und unter einer wahlweisen Zufuhr von Wasser oder Wasserdampf um ein resultierendes Synthesegas (8) zu erzeugen;
c) das Filtern des resultierenden Synthesegases (8) um Asche, Russ und andere feste Partikel vom resultierenden Synthesegas (8) zu trennen;
d) das Einspeisen des gefilterten resultierenden Synthesegases (8') und eines mindestens teilweise oxidierten Bettmaterials (20)in den Verbrennungsteil (6) des Verbrennungs-/Vergasungsreaktors (2), wobei das Bettmaterial ein Material zum Sauerstofftransport ist, vorzugsweise ausgewählt aus einer Gruppe an Schüttmaterial oder geträgertem Material, welches Cu, Fe, Mn, Ni, Si, Al, Mg, Ca, Ti, La, Ce und/oder Zr, deren Oxide, Hydroxide Silikate, Karbonate, Sulfide oder Sulfate sowie irgendeine Mischung davon enthalten;
e) das mindestens teilweise Reduzieren des oxidierten Bettmaterials (20) in dem Verbrennungsteil (6) indem mindestens teilweise das gefilterte resultierende Synthesegas verbrannt wird um Wärme zu erzeugen, die teilweise in den Vergasungsteil (4) überführt wird;
f) das Leiten des Abgases (16) des Verbrennungsteils (6) in einen weiteren Verbrennungsreaktor (18) und das Leiten des mindestens teilweise reduzierten Bettmaterials (22) in einen Oxidationsreaktor (24), in den Luft (26) eingespeist wird um mindestens teilweise das Bettmaterial vor dessen Rückführung zu reoxidieren, wobei das Bettmaterial als Material zum Schwefeltransport benutzt wird durch die Sulfidierung während der mindestens teilweisen Reduktion von Bettmaterial in Anwesenheit des gefilterten resultierenden Synthesegases (8') und der anschliessenden Oxidation des Bettmaterials mit der dazugehörenden SO2-Bildung im Oxidationsreaktor (24); und wobei das frisch reoxidierte Bettmaterial (20) zuerst in den weiteren Verbrennungsreaktor (18) und anschliessend in den Verbrennungsteil (6) eingespeist wird, wie an der Richtung des Materialflusses des Bettmaterials zu sehen ist; und wobei die im Oxidationsreaktor (24) und/oder in dem weiteren Verbrennungsreaktor (18) erzeugte Wärme in den Vergasungsteil (4) durch ein passendes Gerät zum Wärmetransfer, wie zum Beispiel Wärmerohre, überführt wird.

2. Das Verfahren gemäss Anspruch 1, wobei die Asche, der Russ und die anderen festen, gefilterten Partikel wenigstens teilweise in den Vergasungsteil (4) zurückgespeist werden.

3. Das Verfahren gemäss irgendeinem der vorherigen Ansprüche, wobei das Abgas des Oxidationsreaktors (24) in einer Turbine erweitert wird oder benutzt wird um Wärme zu einem Wärmeaustauscher zu überführen.

4. Das Verfahren gemäss irgendeinem der vorherigen Ansprüche, wobei das Abgas des weiteren Verbrennungsreaktors (18) in einer Turbine erweitert wird und benutzt wird um Wärme zu einem Wärmetauscher oder für die mindestens teilweise Verbrennung in einer Brennstoffzelle zu überführen.

5. Das Verfahren gemäss irgendeinem der vorherigen Ansprüche, wobei das Abgas des weiteren Verbrennungsreaktors (18) in einer katalytischen Umwandlung, wie zum Beispiel einer Methanisierung, Fischer-Tropsch-Synthese, Alkohol- oder Ethersynthese oder ähnliches, wobei wahlweise das Gas mittels einer Einheit zur Gasreinigung oder Gaskonditionierung nachgeführt wird.

6. Das Verfahren gemäss irgendeinem der vorherigen Ansprüche, wobei die Betriebsbedingungen und die Bettmaterialien so gewählt werden, dass Sulfat und/oder Alkali oder Schwermetallarten von dem Verbrennungsteil (6) und dem weiteren Verbrennungsreaktor (18) zu dem Oxidationsreaktor (24) transportiert werden können, wo diese mindestens teilweise freigesetzt werden können.

7. Das Verfahren gemäss irgendeinem der vorherigen Ansprüche, wobei die Betriebsbedingungen und die Bettmaterialien so gewählt werden, so dass Teer, organische Schwefelverbindungen und/oder Kohlenwasserstoffe umgewandelt oder abgebaut werden.

8. Das Verfahren gemäss irgendeinem der vorherigen Ansprüche, wobei ein Teil des resultierenden Synthesegases (8) direkt zu dem Abgas (16) des Verbrennungsteils (6) gespeist wird.

9. Das Verfahren gemäss irgendeinem der vorherigen Ansprüche, wobei die im Verbrennungsteil (6) erzeugte Wärme zum Vergasungsteil (4) mithilfe eines passenden Geräts zur Wärmeübertragung, wie zum Beispiel Wärmerohren, weitergeleitet wird.

10. Das Verfahren gemäss irgendeinem der vorherigen Ansprüche, wobei Brennstoff, der Gasbestandteile von der stromabwärts gelegenen Verwendung des Abgases (16) oder (28) von dem Verbrennungsteil (6)
und/oder von dem weiteren Verbrennungsreaktor (18), z.B. von einer katalytischen Umwandlung oder einer mindestens teilweisen weiteren Verbrennung in einer Brennstoffzelle, enthält, wird in den Verbrennungsteil (6) und/oder in den weiteren Verbrennungsreaktor (18) eingespeist.

11. Ein System zur Vergasung von Biomasse und/oder Kohle mit mindestens teilweiser Kohlendioxidtrennung durch Benutzung eines kombinierten Verbrennungs-/Vergasungsreaktor (2), der einen Verbrennungsteil (6) und einen Vergasungsteil (4) hat und folgendes umfasst:
a) einen Zulieferer um die Kohle und/oder Biomasse in den Vergasungsteil (4) des Verbrennungs-/Vergasungsreaktor (2) einzuspeisen;
b) in dem Vergasungsteil (4) das Heizen und das wahlweise unter Druck setzten der Kohle und/oder der Biomasse bei erhöhter Temperatur und unter einem wahlweise erhöhten Druck und unter einer wahlweisen Zufuhr von Wasser oder Wasserdampf um ein resultierendes Synthesegas (8) zu erzeugen;
c) einen Filter um das resultierende Synthesegas (8) zu filtern so dass Asche, Russ und andere feste Partikel von dem resultierenden Synthesegas (8) getrennt werden;
d) mindestens ein Rohr um das gefilterte resultierende Synthesegas (8') und mindestens teilweise oxidiertes Bettmaterial (20) in den Verbrennungsteil (6) des Verbrennungs-/Vergasungsreaktors (2) einzuspeisen, wobei das Bettmaterial ein Material zum Sauerstofftransport ist, vorzugsweise ausgewählt aus einer Gruppe an Schüttmaterial oder geträgertem Material, welches Cu, Fe, Mn, Ni, Si, Al, Mg, Ca, Ti, La, Ce und/oder Zr, deren Oxide, Hydroxide Silikate, Karbonate, Sulfide oder Sulfate sowie irgendeine Mischung davon enthalten;
e) in dem Verbrennungsteil (6) das mindestens teilweise Reduzieren des oxidierten Bettmaterials (20) indem mindestens teilweise das gefilterte resultierende Synthesegas verbrannt wird um Wärme zu erzeugen, die mindestens teilweise durch Mittel zur Wärmeübertragung in den Vergasungsteil (4) überführt wird;
f) mindestens ein weiteres Rohr um das Abgas (16) des Verbrennungsteils (6) in einen weiteren Verbrennungsreaktor (18) zu leiten und um das mindestens teilweise reduzierte Bettmaterial (22) in einen Oxidationsreaktor (24), in den Luft (26) eingespeist wird, zu leiten um mindestens teilweise das Bettmaterial vor dessen Rückführung zu reoxidieren, wobei das Bettmaterial als Material zum Schwefeltransport benutzt wird durch die Sulfidierung während der mindestens teilweisen Reduktion von Bettmaterial in Anwesenheit des gefilterten resultierenden Synthesegas (8') und der anschliessenden Oxidation des Bettmaterial mit der dazugehörenden SO2-Bildung im Oxidationsreaktor (24); und wobei das frisch reoxidierte Bettmaterial (20) zuerst in den weiteren Verbrennungsreaktor (18) und anschliessend in den Verbrennungsteil (6) eingespeist wird, wie an der Richtung des Materialflusses des Bettmaterials zu sehen ist; und wobei die im Oxidationsreaktor (24) und/oder in dem weiteren Verbrennungsreaktor (18) erzeugte Wärme in den Vergasungsteil (4) durch ein passendes Gerät zum Wärmetransfer, wie zum Beispiel Wärmerohre, überführt wird.

## Revendications

1. Procédé de gazéification de biomasse et/ou de charbon avec une séparation au moins partielle du dioxyde de carbone au moyen d'un réacteur combiné de combustion/gazéification (2) comportant une partie combustion (6) et une partie gazéification (4), comprenant les étapes de :
a) alimentation du charbon et/ou alimentation de la biomasse dans la partie de gazéification (4) du réacteur de combustion/gazéification (2) ;
b) dans la partie de gazéification (4), éventuellement sous une alimentation d'eau ou de vapeur d'eau, chauffage et éventuellement mise sous pression du charbon et/ou de la biomasse à une température élevée et à une pression éventuellement élevée afin de générer un produit gazeux (8) ;
c) filtration du produit gazeux (8) pour séparer les cendres, la suie et les autres particules solides du produit gazeux (8) ;
d) alimentation du produit gazeux filtré (8') et d'un matériau de lit au moins partiellement oxydé (20) dans la partie de combustion (6) du réacteur de combustion/gazéification (2), dans lequel le matériau de lit (20) est un matériau de transfert d'oxygène ; choisi de préférence parmi un groupe de matériaux en vrac ou supportés contenant du Cu, du Fe, du Mn, du Ni, du Si, de l'Al, du Mg, du Ca, du Ti, du La, du Ce et/ou du Zr, leurs oxydes, hydroxydes, silicates, carbonates, sulfures ou sulfates ainsi que tout mélange de ceux-ci ;
e) dans la partie de combustion (6), réduction au moins partielle du matériau de lit oxydé (20) par combustion au moins partielle du produit gazeux filtré afin de générer de la chaleur qui est transférée partiellement dans la partie de gazéification (4) ;
f) acheminement du gaz d'échappement (16) de la partie de combustion (6) dans un autre réacteur de combustion (18) et acheminement du matériau de lit au moins partiellement réduit (22) dans un réacteur d'oxydation (24) alimenté en air (26) afin de ré-oxyder au moins partiellement le matériau de lit avant sa recirculation ; dans lequel le matériau de lit est utilisé comme matériau de transfert de soufre par sulfuration pendant la réduction au moins partielle du matériau de lit en présence du produit gazeux filtré (8') et l'oxydation subséquente du matériau de lit avec formation de SO₂ inhérente dans le réacteur d'oxydation (24) ; et dans lequel le matériau de lit fraîchement ré-oxydé (20) est alimenté d'abord dans le réacteur de combustion supplémentaire (18) et ensuite dans la partie de combustion (6) comme observé dans la direction d'écoulement de matériau du matériau de lit ; et dans lequel la chaleur générée dans le réacteur d'oxydation (24) et/ou dans le réacteur de combustion supplémentaire (18) est transférée à la partie de gazéification (4) au moyen d'un dispositif de transfert de chaleur approprié tel que des caloducs.

2. Procédé selon la revendication 1, dans lequel les cendres, la suie et les autres particules solides filtrées sont réinjectées au moins partiellement dans la partie de gazéification (4).

3. Procédé selon l'une quelconque des revendications précédentes, dans lequel le gaz d'échappement du réacteur d'oxydation (24) est détendu dans une turbine ou est utilisé pour transférer de la chaleur à un échangeur de chaleur.

4. Procédé selon l'une quelconque des revendications précédentes, dans lequel le gaz d'échappement du réacteur de combustion supplémentaire (18) est détendu dans une turbine ou est utilisé pour transférer de la chaleur à un échangeur de chaleur ou pour une combustion supplémentaire au moins partielle dans une pile à combustible.

5. Procédé selon l'une quelconque des revendications précédentes, dans lequel le gaz d'échappement du réacteur de combustion supplémentaire (18) est utilisé dans une conversion catalytique telle qu'une méthanisation, une synthèse de Fischer-Tropsch, une synthèse d'alcools et d'éthers ou similaires, éventuellement l'alimentation du gaz par l'intermédiaire d'unités de nettoyage de gaz et/ou de conditionnement de gaz.

6. Procédé selon l'une quelconque des revendications précédentes, dans lequel les conditions de fonctionnement et le matériau de lit sont choisis de telle sorte que des espèces soufrées et/ou alcalines ou de métaux lourds peuvent être transportées de la partie de combustion (6) et du réacteur de combustion supplémentaire (18) au réacteur d'oxydation (24) où elles sont au moins partiellement libérées.

7. Procédé selon l'une quelconque des revendications précédentes, dans lequel les conditions de fonctionnement et le matériau de lit sont choisis de telle sorte que les goudrons, les espèces soufrées organiques et/ou les hydrocarbures soient reformés ou décomposés.

8. Procédé selon l'une quelconque des revendications précédentes, dans lequel une partie du produit gazeux (8) est alimentée directement à l'échappement (16) de la partie de combustion (6).

9. Procédé selon l'une quelconque des revendications précédentes, dans lequel la chaleur générée dans la partie de combustion (6) est transférée à la partie de gazéification (4) au moyen d'un dispositif de transfert de chaleur approprié tel que des caloducs.

10. Procédé selon l'une quelconque des revendications précédentes, dans lequel les courants gazeux contenant du carburant provenant d'une utilisation en aval des gaz d'échappement (16) ou (28) de la partie de combustion (6) et/ou du réacteur de combustion supplémentaire (18), par exemple provenant d'une conversion catalytique ou d'une combustion supplémentaire au moins partielle dans une pile à combustible, sont alimentés à la partie de combustion (6) et/ou au réacteur de combustion supplémentaire (18).

11. Système de gazéification de biomasse et/ou de charbon avec une séparation au moins partielle du dioxyde de carbone à l'aide d'un réacteur combiné de combustion/gazéification (2) comportant une partie de combustion (6) et une partie de gazéification (4), comprenant :
a) un dispositif d'alimentation pour alimenter le charbon et/ou la biomasse dans la partie de gazéification (4) du réacteur de combustion/gazéification (2) ;
b) dans la partie de gazéification (4), éventuellement sous une alimentation d'eau ou de vapeur d'eau, le chauffage et éventuellement la mise sous pression du charbon et/ou de la biomasse à une température élevée et à une pression éventuellement élevée afin de générer un produit gazeux (8) ;
c) un filtre pour filtrer le produit gazeux (8) pour séparer les cendres, la suie et les autres particules solides du produit gazeux (8) ;
d) au moins un conduit pour alimenter le produit gazeux filtré (8') et un matériau de lit au moins partiellement oxydé (20) dans la partie de combustion (6) du réacteur de combustion/gazéification (2), dans lequel le matériau de lit (20) est un matériau de transfert d'oxygène, choisi de préférence parmi un groupe de matériaux en vrac ou supportés contenant du Cu, du Fe, du Mn, du Ni, du Si, de l'Al, du Mg, du Ca, du Ti, du La, du Ce et/ou du Zr, leurs oxydes, hydroxydes, silicates, carbonates, sulfures ou sulfates ainsi que tout mélange de ceux-ci ;
e) dans la partie de combustion (6), la réduction au moins partielle du matériau de lit oxydé (20) par combustion au moins partielle du produit gazeux filtré afin de générer de la chaleur qui est transférée par un moyen de transfert de chaleur au moins partiellement dans la partie gazéification (4) ;
f) au moins un conduit supplémentaire pour acheminer le gaz d'échappement (16) de la partie de combustion (6) dans un réacteur de combustion supplémentaire (18) et pour acheminer le matériau de lit au moins partiellement réduit (22)dans un réacteur d'oxydation (24) alimenté en air (26) afin de ré-oxyder au moins partiellement le matériau de lit avant sa recirculation, dans lequel le matériau de lit est utilisé comme matériau de transfert de soufre par sulfuration pendant la réduction au moins partielle du matériau de lit en présence du produit gazeux filtré (8') et l'oxydation subséquente du matériau de lit avec formation de SO₂ inhérente dans le réacteur d'oxydation (24) ; et dans lequel le matériau de lit fraîchement ré-oxydé (20) est alimenté d'abord dans le réacteur de combustion supplémentaire (18) et ensuite dans la partie de combustion (6) comme observé dans la direction d'écoulement de matériau du matériau de lit ; et dans lequel la chaleur générée dans le réacteur d'oxydation (24) et/ou dans le réacteur de combustion supplémentaire (18) est transférée à la partie de gazéification (4) au moyen d'un dispositif de transfert de chaleur approprié tel que des caloducs.
